Europäisches Patentamt

European Patent Office

Office européen des brevets

(11) Publication number: **0 306 535 B1**

# EUROPEAN PATENT SPECIFICATION

(45) Date of publication of patent specification: **09.02.94**   (51) Int. Cl.⁵: **G05B  19/04**

(21) Application number: **88901928.7**

(22) Date of filing: **19.02.88**

(86) International application number:
**PCT/JP88/00181**

(87) International publication number:
**WO 88/06751 (07.09.88 88/20)**

(54) **PROCESSOR FOR PLC AND PLC.**

(30) Priority: **03.03.87 JP 48408/87**

(43) Date of publication of application:
**15.03.89 Bulletin  89/11**

(45) Publication of the grant of the patent:
**09.02.94 Bulletin  94/06**

(84) Designated Contracting States:
**DE FR GB**

(56) References cited:
**FR-A- 2 268 303      JP-A- 5 477 879
JP-A-57 166 605      JP-A-62 111 303
JP-A-62 154 104      US-A- 3 753 243**

(73) Proprietor: **FANUC LTD.
3580, Shibokusa Aza-Komanba, Oshino-mura
Minamitsuru-gun, Yamanashi 401-05(JP)**

(72) Inventor: **YAMAUCHI, Takashi
20-202, Green Hill Terada
432, Terada-machi
Hachioji-shi Tokyo 193(JP)**

(74) Representative: **Brunner, Michael John et al
GILL JENNINGS & EVERY
Broadgate House
7 Eldon Street
London EC2M 7LH (GB)**

Rank Xerox (UK) Business Services
(3.10/3.09/3.3.3)

EP 0 306 535 B1

## Description

The present invention relates to a PLC (programmable logic controller) processor for executing logic operations and a PLC, and more particularly to a PLC processor and PLC, in which unnecessary logic operations are omitted to thereby increase the processing speed.

A PLC (programmable logic controller) is also referred to as a PC (programmable controller) and has been extensively used in machine tools and manufacturing machineries.

Due to a historical ground that in the PLC, a logic is assembled by the use of a hardware relay, a logic expression referred to as ladder diagram has been extensively used. Technical personnel who have used the hardware relays are familiar with the expression of the ladder diagram and are accustomed to designing with the use thereof. Since the logic is excellent in visual aspect, it has also been extensively used in a PLC system employing a microprocessor.

In the PLC using a microprocessor, a greater number of instruction steps are processed due to enhancement of the microprocessor and attendant to a highly complicated control subject. Those instructions are required to be processed in real time within a limited period of time as required by the control subject. In view of such circumstances, a high-speed processing in the PLC is a requirement.

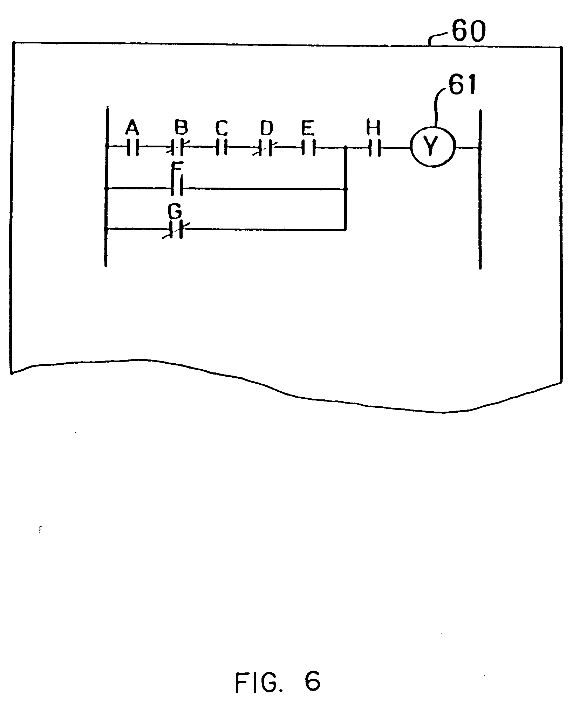

An example of a ladder diagram is shown in Fig. 6, in which numeral 60 indicates a ladder diagram sheet. Logic relay contacts are denoted by characters A, B, C, D, E, F, G and H. Numeral 61 denotes a coil of the logic relay. Such a ladder diagram implements logic processing as indicated below.

| RD | A (1) |
| AND•NOT | B (2) |
| AND | C (3) |
| AND•NOT | D (4) |
| AND | E (S) |
| OR | F (6) |
| OR•NOT | G (7) |
| AND | H (8) |
| WRT | Y (9) |

Accordingly, assuming that an average processing period of time of each instruction is t, a period of time 9t is required in total. It has therefore been contemplated to shorten the processing period of time t to increase the processing speed. The period of time t is determined depending upon the hardware of the microprocessor, memories or other components, so that the processing speed cannot be increased by more than a predetermined amount.

However, depending upon the situations, all logic operations may not be implemented in the ladder diagram. In the example shown in Fig. 6, if A is "0" in logic value, the logic operations from (1) to (5) are all "0", so that it is permitted to directly jump to instruction (6). As a consequence, the logic operations of (2) through (5) can be omitted and thus the processing period can be shortened by 4t.

Conversely, assuming that the results of the logic operations in (1) through (5) are all "1" in logic value, the results of the operations of (6) and (7) are "1" in logic value irrespective of the values of F and G. Thus, the logic operations in (6) and (7) can be omitted, and the processing period can be shortened by 2t.

Therefore, a processing period can be shortened by omitting some operations which are unnecessary under a prescribed situation and jumping to an operation to be executed. Yet, there is a possibility that in commonly used processors, the processing period might be prolonged when executing check instructions and thus the processing period may not be shortened in all cases.

FR-A-2268303, over which the present invention is characterised, discloses a PLC processor with jump condition checking.

It is an object of the invention to resolve the above-described drawbacks and to provide a PLC processor and a PLC in which unnecessary logic operations are omitted by means of a processor responsive to the same instruction as that for the logic operations and provided with a jump condition checking means for checking, based upon a relation between the result of a logic operation and the instruction to be subsequently executed, whether or not a jump should be carried out, whereby the processing speed is increased.

It is another object of the invention to provide a high-speed PLC in which logic operations are executed by a high-speed processor and processes other than the logic operations are executed by another all-purpose processor.

2

According to the present invention, in order to resolve the above-described drawbacks, there is provided a PLC (programmable logic controller) processor for carrying out logic operations, comprising:

a logic operation means for executing a logic operation;

a jump condition checking means for checking whether or not a logic operation subsequent to a current logic operation should be executed based on a relation between a resultant value of the current logic operation and the kinds of logic operations commanded by the immediately following instructions; characterised by:

a jump inhibition means for determining in relation to a particular operation whether a jump may be performed or must be inhibited; and

a jump execution means for executing the logic operation subsequent to logic operations for which the jump inhibition means determines that a jump may be performed, only if the jump condition checking means determines that the logic operation should be executed.

According to the invention, if the result of a logic operation for an instruction being executed is "1", the subsequent OR instructions can be omitted. On the other hand, if the result of the logic operation is "0", the subsequent AND instructions can be omitted. By providing the checking means to the processor which is operable in response to the same type instruction as that of the logic processing, the processing speed as a whole can be increased without need for carrying out special checking processing instructions and by omitting unnecessary instructions.

The processor of the type as referred to above is exclusively used for executing the logic processes and another processor is employed for executing the remaining processes, whereby the processing period of time can further be reduced.

An example of a PLC according to the invention will now be described with reference to the accompany drawings, in which:-

Fig. 1 is a block diagram showing a processor according to one embodiment of the invention;

Fig. 2 is a diagram indicating an instruction format of the processor;

Fig. 3 is a diagram showing a hardware arrangement of the processor;

Fig. 4 is a diagram showing an address generating circuit of the processor;

Fig. 5 is a block diagram showing a PLC; and

Fig. 6 is a diagram showing an example of a circuit of a ladder diagram.

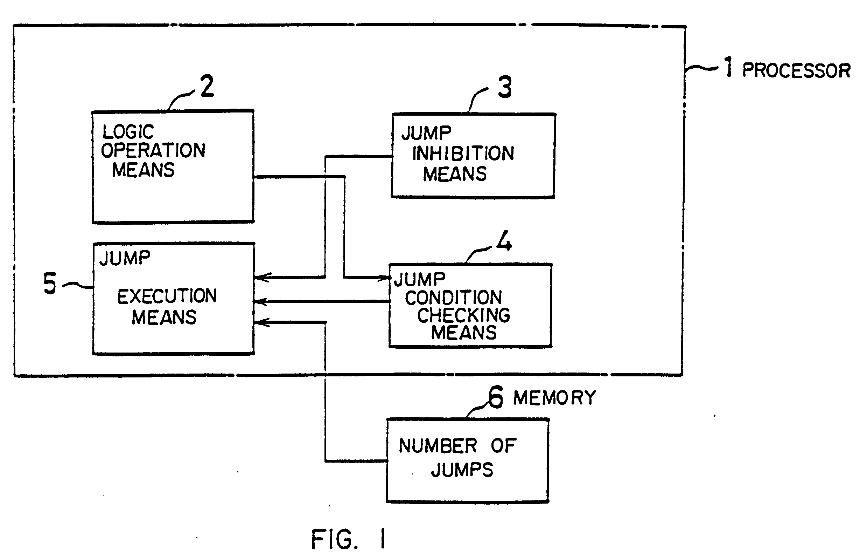

Fig. 1 is a block diagram showing a processor according to one embodiment of the invention. In the figure, a processor 1 is comprised of a logic operation means 2, a jump inhibition means 3, a jump condition checking means 4 and a jump execution means 5.

The logic operation means 2 implements logic operations and executes logic operations of AND, OR, NOT, etc. Other than the logic operation, the logic operation means 2 is capable of executing numerical computations.

The jump inhibition means 3 check whether or not jump is allowed. For example, a write instruction for writing the result of the logic operation (which corresponds to the instruction Y shown in Fig. 6 and to the instruction (9) set forth in the Background Art section) cannot be omitted, therefore, the instruction preceding such unomittable instruction is inhibited from being jumped. This is accomplished by imposing a jump inhibition to the instruction preceding to the write instruction when the PLC program is assembled or compiled.

The jump condition checking means 4 checks whether or not jump should be implemented. This is accomplished in accordance with the following theory.

First, assuming that an instruction is disposed preceding AND-interrelated instructions and when the result of the logic operation of that instruction is "0", the results of the subsequent logic operations of the AND-interrelated instructions are "0" whatever the number of the AND-interrelated instructions may be. Thus, the AND-interrelated instructions are omitted, and jump is performed over to OR-interrelated instructions or the write instruction. What is referred to by the AND-interrelated instructions is intended to cover not only an AND instruction but also a NOT AND instruction (which instruction corresponds to the logic relay B shown in Fig. 6).

Second, in the cases where the OR-interrelated instructions follow a particular instruction, if the result of the logic operation of the particular instruction is "1", the results of the following OR-interrelated instructions are always "1". In such cases, a jump can be performed over to the subsequent AND-interrelated instruction or the write instruction while omitting the executions of the instructions.

In order to enable checks as to whether the jump can be performed, necessary information is incorporated into instructions at the time when the PLC program is assembled or compiled.

The jump execution means 5 executes a logic instruction in accordance with conditions supplied from both the jump inhibition means 3 and the jump condition checking means 4. Of course, only when the above-mentioned two conditions are complied with at the same time, the logic instruction is executed. If the conditions are not complied with, the processing immediately advances to the subsequent instruction. A number to be jumped is stored in an external memory 6.

The memory 6 stores a number of logic instructions and such a number is stored therein in the form of an integer. The theory as set forth with respect to the jump condition checking means is equally applied to this number. Specifically, in the case where the AND-interrelated instructions follow, that number is a number of AND-interrelated instructions disposed ahead of the subsequent OR-interrelated or write instructions. On the other hand, in the case of OR-interrelated instructions, that number is a number of the OR-interrelated instructions disposed ahead of the subsequent AND-interrelated or write instructions.

Other than those stated above, the processor 1 is provided with a plurality of functions for inputting and outputting addressing signals and data. Details of such functions will be described later. Only the functional description of the units which are closely related to the gist of the invention is presented here.

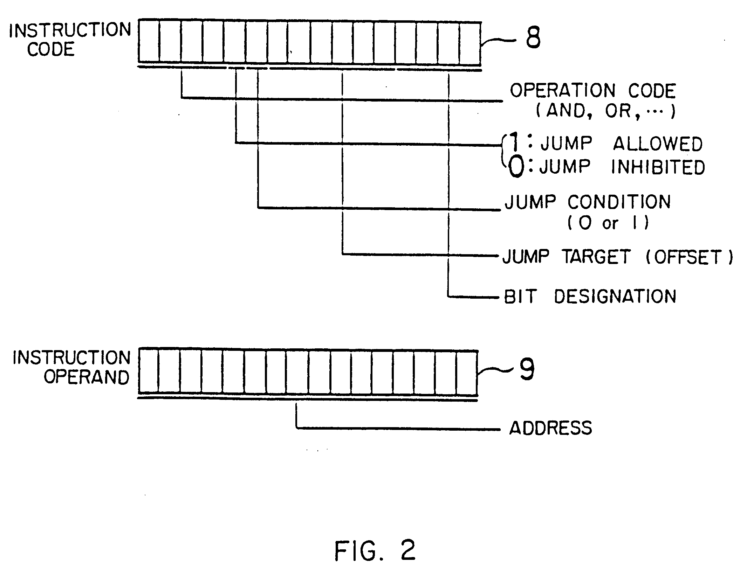

In Fig. 2, there is shown an instruction format of a processor according to this embodiment. An instruction is composed of two words. Denoted by numeral 8 is a high - order one word providing an instruction code. Denoted by numeral 9 is a low-order one word providing an instruction operand.

The instruction code 8 is provided with functions as shown in the figure. The left four bits are a processing code, which, for example, determines instructions, such as AND, OR, etc.

With the next one bit, it is discriminated whether or not jump is allowed, in which when "1", jump is allowed according to a condition whereas when "0", jump is inhibited. The latter corresponds to such instructions that cannot be omitted as in the case of a read instruction (corresponding to the instruction A in Fig. 6) and a write instruction (corresponding to Y in Fig. 6). Specifically, in the instruction preceding to such kind of instructions, that bit is rendered "0" to inhibit jumping. "1" or "0" of this bit is determined when a source program is converted to an object program.

The succeeding one bit is for determining a jump condition, which is rendered "1" when the AND-interrelated instructions follow and is rendered "0" when the OR-interrelated instructions follow. Assuming that this bit value is Q said result of a logic operation is S, then

$$P = Q \cdot \overline{S} + \overline{Q} \cdot S$$

When P is "1", jump is carried out and when P is "0", jump is not carried out. This agrees with the result described previously setting forth that jump is carried out when the result of operation is "0" whereas jump is not carried out when the result of operation is "1". On the other hand, the foregoing description complies with a requirement that when the OR-interrelated instructions follow, jump is carried out when that bit is "1" whereas jump is not carried out when that bit is "0". This bit is also determined when the source program is converted to the object program.

The succeeding seven bits are representative of a number of instructions to be jumped. When the AND-interrelated instructions follow, this number is equal to the number of such AND-interrelated instructions, while when the OR-interrelated instructions follow, this number is equal to the number of such OR-interrelated instructions. Such numbers are determined when the source program is converted to the object program upon counting a number of instructions.

The last four bits are representative of bits corresponding to data to be processed. In this embodiment, data is composed of 16 bits per one word. The logic relay which is subjected to logic operation is represented by one-bit data which is specified by using these four bits.

An instruction operand is composed of 16 bits per one word, with which an address to be processed is specified. And, the corresponding bits are specified by the last four bits of the instruction code described above.

With the processor having an instruction system described above, unnecessary logic conditions can be omitted and thus the processing speed can be increased. Since the jump conditions, the number of jumps, etc. can automatically be processed by an assembler or a compiler when the object program is converted to the source program, this does not cause a supplemental burden on a programmer.

The word organization and the number of bits can arbitrarily be designed and altered, and variety of word organizations and bit allocations may be made.

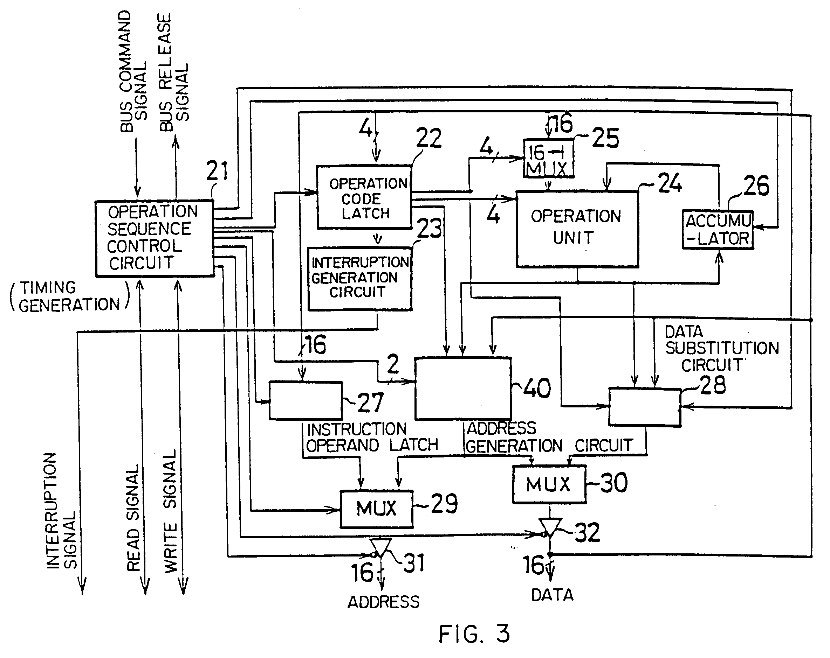

In Fig. 3, there is shown a hardware arrangement of the processor according to the present invention. Numerals indicated alongside signal lines with an oblique line segment represent a number of bits selected from a bus line for usage. For example, numeral 4 represents that four bits are used among the bus line. In the figure, an operation sequence control circuit 21 performs timing controls for the entire processor.

An operation code latch 22 latches the operation code shown in Fig. 2. An interruption generation circuit 23 generates an interruption signal when the operation code latched in an instruction code latch is not a

4

EP 0 306 535 B1

logic operation code, such as AND, OR, i.e. in the case of a specific subroutine. This interruption signal is sent to another all-purpose processor for the purpose of processing other than the logic operations.

A multiplexer (MUX) 25 selects a bit to be processed in one word from the low-order four bits of the instruction code 8 (Fig. 2) and sends to an operation unit. The operation unit 24 implements logic operations with respect to the bit selected by the multiplexer 25 in accordance with the operation code from the operation code latch 22.

An accumulator 26 temporarily stores the result of operation. For example, when the instructions are:

| RD | A (19) |
|------|--------|
| AND | B(11) |

the content of A is firstly stored in the accumulator 26, then the content of B is ANDed with the content A stored in the accumulator 2G and the resultant content is stored in the accumulator 2.

An instruction operand latch 27 latches the content of the instruction operand 9 (Fig. 2) and outputs it to the multiplexer 29 for fetching a corresponding address.

A data substitution circuit 28 synthesizes one-bit which has been subjected to operation processing when the write instruction is executed with another bit which has not been subjected to operation, and outputs the resultant bit. While the logic operation is processed every one bit, the reminder bit is read out without subjecting operations and is written into the corresponding address together with the bit which has been subjected to operation processing.

An address generation circuit 40 controls addresses for performing jumping based on a relation between the logic operation processes described previously and the subsequent instruction. Details of this address generation will be described later.

Multiplexers 29 and 30 select buses in response to a timing signal fed from the operation sequence control circuit 21. Denoted by numerals 31 and 32 are an address bus drive circuit and a data bus drive circuit, respectively

The operation sequence control circuit 21 receives a bus command signal from an externally provided all-purpose processor and in response thereto issues a bus release signal indicating that the bus is available. This is because the externally provided all-purpose processor needs to use the bus when it executes a specific subroutine or the like. A read signal and a write signal for reading out of and writing into a memory connected to the processor are issued from the processor.

With the arrangement as described above, the logic operations are processed with respect to the data stored in the memory (not shown).

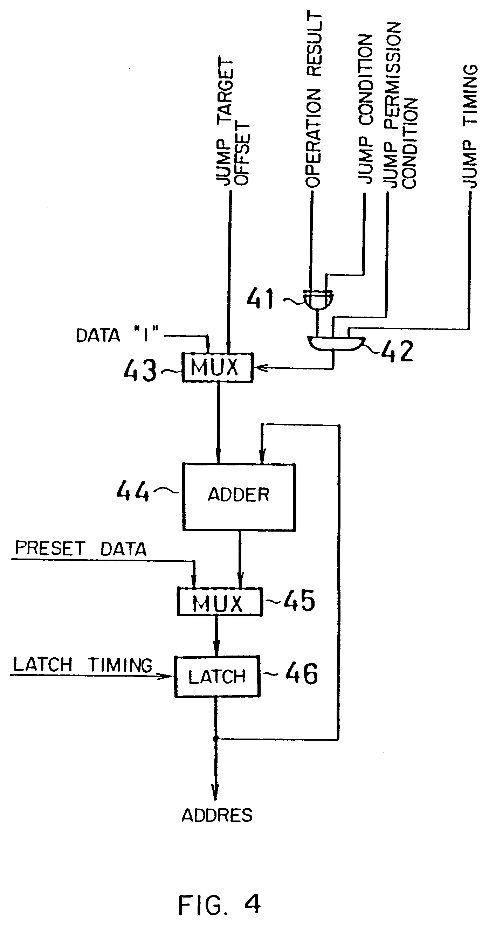

The address generation circuit is shown in Fig. 4. In the figure, an exclusive-OR circuit (hereinafter referred to as EOR circuit) 41 has one input terminal to which a logic operation result of the execution instruction is applied. The EOR circuit 41 has the other input terminal to which the jump condition signal is applied. As described earlier, this jump condition signal is "1" in the case where the AND-interrelated instructions follow whereas the signal is "0" in the case where the OR-interrelated instructions follow. As described previously, the output of the EOR circuit 41 is represented by a equation:

$$P = Q \cdot \overline{S} + \overline{Q} \cdot S$$

When P is equal to "1", one of the conditions allowing to jump is complied with.

An AND circuit 42 has a first input terminal to which the output of the EOR circuit 41 is applied, a second input terminal to which a jump permission condition signal is applied. The jump permission condition signal is in "0" and inhibits jumping when instructions which cannot be omitted follow, such as a read instruction, or a write instruction. The AND circuit 42 has a third input terminal to which applied is a jump timing signal which is outputted from the operation sequence control circuit 21 shown in Fig. 3. When these three conditions are met, the output of the AND circuit 42 is rendered "1".

A multiplexer 43 selects data "1" when the output of the AND circuit 42 is "0", in the case of which the address is counted up one by one. When the output of the AND circuit 42 is "1", a jump target offset (the number of instructions for jumping) is selected.

An adder 44 adds one to the address of the last instruction when the jump is not performed. When the jump is performed, the jump target offset is selected by the multiplexer 43 and the number of jumps are added to the address of the last instruction, thereby carrying out the jump. To a multiplexer 45, preset data is added. A latch 46 latches the address following the instruction which has operated.

In this manner, the jumping address is generated by the address generation circuit.

5

With the arrangement of the processor as described, the unnecessary logic operations can be omitted and the speed of the logic processing can be increased. This is particularly effective in processing logic operations in the ladder format, since they contain a considerable number of unnecessary logic operations.

In the foregoing description, although a hardware arrangement has been described in which unnecessary logic processing is omitted, it is possible to achieve the same result by way of a software. However, when processing is effected by the software, a check instruction needs to be provided for checking whether or not jump should be performed, so that the goal tends to fluctuate depending upon a ratio of omittable instruction step number to an instruction number for jump checking.

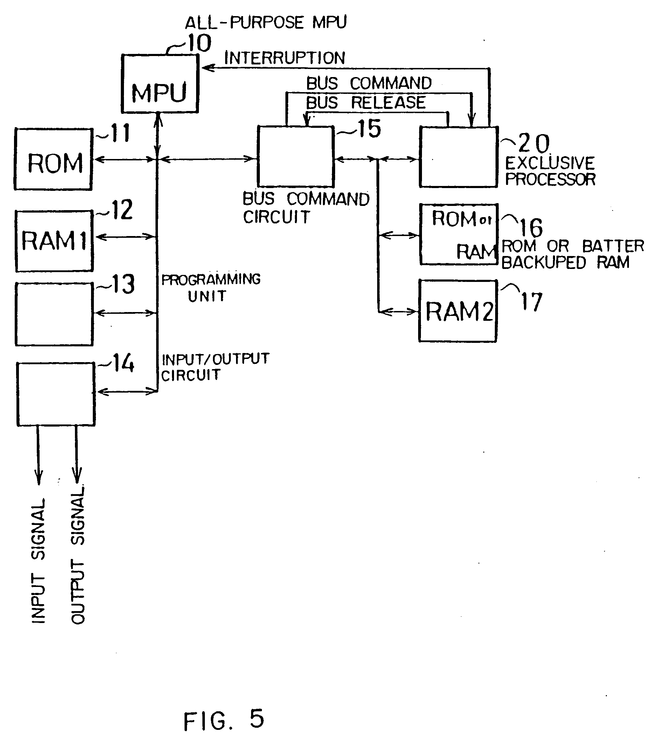

In Fig. 5, there is shown a block diagram illustrating a PLC according to one embodiment of the present invention in which the above-described processor is used.

In the figure, an all-purpose processor 10 as commonly used is provided, which carries out numerical computations, processings of function instructions, etc. precluding the overall control of the PLC and the logic operations.

In ROM 11, stored is a control program of the entire PLC, according to which the PLC is controlled.

A RAM 12 stores rewritable data, parameters which are necessary for controlling the entire PLC.

A programming unit 13 produces a program for controlling a subject to be controlled by the PLC, e.g. a machine tool. The programming unit 13 is provided with a display unit for displaying a program and data, and an input unit for inputting the program and the data. As the display unit, a CRT, crystal liquid or the like are used. As the input unit, a keyboard, paper tape reader, cassette tape reader or the like are used. The programming unit 13 may be constructed to incorporate therein a software for inputting and outputting those data. The software has a function for assembling or compiling the inputted source program to an object format. Such software may be loaded into the ROM 11, or it is possible to implement it with the use of the all-purpose processor 10 or with an exclusive processor provided in the programming unit 13.

An input/output circuit 14 is an interface connected to the subject to be controlled. This input/output circuit can further be connected to an upper-class host computer, computerized numerical controller, etc.

A bus command circuit 15 is used for controlling the usage of the bus between the all-purpose processor 10 and an exclusive processor to be described later.

The exclusive processor 20 as described with reference to Figs. 1 and 2 exclusively executes logic processing. When it is intended to transfer data from the all-purpose processor 10 to the exclusive processor 20, the all-purpose processor 10 sends a command to the bus command circuit 15 requesting the use of the bus in the all-purpose processor 20. The bus command circuit 15 in turn sends this command to the exclusive processor 20. Upon receipt of this command, the exclusive processor 20 releases the bus and permits the all-purpose processor 10 to use it at the time when the instructions which the exclusive processor is executing has terminated. When the exclusive processor 20 receives an instruction other than the logic operations during execution of the instructions, it causes the all-purpose processor 10 to interrupt and transfers that instruction to the all purpose processor 10 to enable it to execute the instruction. In this fashion, the exclusive processor only executes the logic operations at a high speed.

A memory 16 stores a program (ladder diagram) which the exclusive processor 20 processes, for which a ROM or a battery-backuped RAM is used. When the initial program is incomplete and debugging is performed, the program is stored in the battery-backuped RAM and is corrected. Upon completion of the debugging and the program is made to be complete, then the complete program is loaded into the ROM for use.

A RAM 17 stores therein data which are necessary for the exclusive processor 20 to execute the program loaded in the memory 16, and logic data to be subjected to logic processing.

The exclusive processor 20 executes the program loaded in the memory 16. If it is the logic processing, execution is immediately started. If the program is not directed to the logic operations but a special function instruction, an interruption signal is generated to thereby cause the all-purpose processor 10 to interrupt. In response to the interruption signal, the all-purpose processor 10 issues a command to the bus command circuit 15 requesting the use of the bus. The bus command circuit 15 issues the bus command signal to the exclusive processor 20. In response to the signal from the bus command circuit 15, the exclusive processor 20 releases the bus at a break of the instruction and outputs the bus release signal to the bus command circuit 15. As a result, the all-purpose processor 10 is capable of using the bus of the exclusive processor 20 and executes the special function instruction upon reading it out of the memory 16. When the execution of this instruction is terminated, the control again returns to the exclusive processor 20 and the latter again executes the logic processing.

With the arrangement described above, the ladder diagram is executed in the following manner. First, the all-purpose processor 10 reads the input signal out of the input/output circuit 14 and the signal thus

6

read out is written into the RAM 17. Then, the exclusive processor processes the logic operations of the input data written in the RAN 17 in accordance with the program (ladder diagram) loaded in the memory 16. The resultant data is written into another location of the RAM 17. When all the program is terminated, the all-purpose processor 10 reads the operation data out of the RAM 17 and outputs it through the input/output circuit 14. By the repetition of the above operations, the ladder diagram is carried out. In the exclusive processor 20 as used, unnecessary logic operations are excluded and executes only the logic operations, whereby the processing speed can further be increased.

As described, according to the invention, it is arranged so that unnecessary logic operations are omitted in conformity with the kinds of instructions and the result of the logic operation. The checking to this effect is implemented simultaneously with the execution of the instructions. Therefore, the logic processes can be performed at a high speed.

Further, the processor as described above can be used as an exclusive processor for executing logic operations, and another processor is employed for executing the remaining instructions, whereby a PLC operable at a high speed can be obtained.

## Claims

1. A PLC (programmable logic controller) processor (1) for carrying out logic operations, comprising:

a logic operation means (2) for executing a logic operation;

a jump condition checking means (4) for checking whether or not a logic operation subsequent to a current logic operation should be executed based on a relation between a resultant value of the current logic operation and the kinds of logic operation commanded by the immediately following instructions; characterised by:

a jump inhibition means (3) for determining in relation to a particular operation whether a jump may be performed or must be inhibited; and

a jump execution means (5) for executing the logic operation subsequent to logic operations for which the jump inhibition means determines that a jump may be performed, only if the jump condition checking means (4) determines that the logic operation should be executed.

2. A PLC having two processors (20,10) comprising:

an exclusive PLC processor (20) in accordance with claim 1, wherein the exclusive PLC processor executes logic operations; and

a second processor (10) for processing other than logic operations.

## Patentansprüche

1. Prozessor (1) für einen programmierbaren logischen Regler zur Ausführung von logischen Operationen mit

einer logischen Operationseinrichtung (2) zur Ausführung einer logischen Operation;

einer Sprungzustandsüberprüfungseinrichtung (4) zum Überprüfen, ob eine logische Operation nach einer momentanen logischen Operation auf der Basis der Beziehung zwischen einem resultierenden Wert der momentanen logischen Operation und den durch die unmittelbar nachfolgenden Befehle vorgegebenen Arten von logischen Operationen ausgeführt werden soll oder nicht; gekennzeichnet durch

eine Sprungverhinderungseinrichtung (3) zur Festlegung, ob in Abhängigkeit von einer speziellen Operation ein Sprung durchgeführt werden kann oder verhindert werden muß; und

eine Sprungausführungseinrichtung (5) zur Ausführung der logischen Operation nach den logischen Operationen, für die die Sprungverhinderungseinrichtung festgelegt hat, daß ein Sprung durchgeführt werden kann, und zwar nur dann, wenn die Sprungzustandsüberprüfungseinrichtung (4) festlegt, daß die logische Operation ausgeführt werden soll.

2. Programmierbarer logischer Regler mit zwei Prozessoren (20, 10) mit

einem Exklusivprozessor (20) für einen programmierbaren logischen Regler gemäß Anspruch 1, bei dem der Exklusivprozessor logische Operationen ausführt; und

einem zweiten Prozessor (10) zur Ausführung von anderen als logischen Operationen.

**Revendications**

1.  Un processeur (1) pour CLP (contrôleur logique programmable) pour mettre en oeuvre des opérations logiques, comprenant :

    un moyen d'opération logique (2) pour effectuer une opération logique ;

    un moyen de vérification de condition de saut (4) permettant de vérifier si une opération logique ultérieure à une opération logique actuelle doit ou non être effectuée sur la base d'une relation entre une valeur résultant de l'opération logique actuelle et des types d'opérations logiques commandées par l'instruction immédiatement suivante ; caractérisé par

    un moyen d'inhibition de saut (3) permettant de déterminer, en relation avec une opération particulière, si un saut peut être effectué ou doit être inhibé ; et

    un moyen d'exécution de saut (5) pour effectuer l'opération logique ultérieure aux opérations logiques pour lesquelles le moyen d'inhibition de saut détermine qu'un saut peut être effectué, seulement si le moyen de vérification de condition de saut (4) détermine que l'opération logique doit être effectuée.

2.  Un CLP présentant deux processeurs (20, 10), comprenant :

    un processeur CLP exclusif (20) conforme à la revendication 1, dans lequel le processeur CLP exclusif effectue des opérations logiques ; et

    un second processeur (10) permettant de traiter des opérations autres que logiques.

FIG. I

INSTRUCTION CODE — 8

OPERATION CODE (AND, OR, ... )

1 : JUMP ALLOWED
0 : JUMP INHIBITED

JUMP CONDITION (O or I)

JUMP TARGET (OFFSET)

BIT DESIGNATION

INSTRUCTION OPERAND — 9

ADDRESS

FIG. 2

FIG. 3

FIG. 4

FIG. 5

FIG. 6